# EUROPÄISCHE PATENTANMELDUNG

(11) **EP 3 378 619 A1**
(43) Veröffentlichungstag der Anmeldung: **26.09.2018**
(21) Anmeldenummer: 18160910.8
(22) Anmeldetag: 09.03.2018
(51) Int. Cl.: B29C 44/02, B29C 64/106, B29C 64/209, B29C 47/00

(54) **VERFAHREN UND VORRICHTUNG ZUM COMPUTERGESTÜTZTEN ERZEUGEN 3-DIMENSIONALER SCHAUMSTRUKTUREN AUS EINEM GEMISCH AUS EINEM POLYMERWERKSTOFF UND EINEM TREIBMITTEL**

(30) Priorität: 13.03.2017 DE 102017105231
(71) Anmelder: Institut für Holztechnologie Dresden gemeinnützige GmbH, 01217 Dresden (DE)
(72) Erfinder: Gauser, Dipl.-Ing. (FH) Tony, 09380 Thalheim (DE); Kaufhold, Dipl.-Ing. Julia, 01217 Dresden (DE); Fischer, Dr. Martin, 01217 Dresden (DE)
(74) Vertreter: Sperling, Thomas

(57) **Zusammenfassung**

Die Erfindung betrifft ein Verfahren zum computergestützten Erzeugen 3-dimensionaler Schaumstrukturen, bei dem ein Gemisch aus einem Polymerwerkstoff und einem Treibmittel innerhalb einer Extrusionseinheit (2) zu einer an der Extrusionseinheit (2) angeordneten Düse (6) transportiert wird, dem Gemisch aus Polymerwerkstoff und Treibmittel innerhalb der Extrusionseinheit (2) thermische Energie zugeführt wird, das Gemisch unter erhöhtem Druck durch die Düse (6) extrudiert wird, das Gemisch entsprechend eines vorgegebenen 3D-Computermodells voxelweise auf eine Druckunterlage (8) ausgetragen wird, wobei die Lage der Druckunterlage (8) zu der davon beabstandet angeordneten Düse (6) in drei Dimensionen variierbar ist und durch eine Steuerung des Treibmittelanteils und/ oder des Eintrags an thermischer Energie und/ oder der Austragsgeschwindigkeit eine Einstellung der Dichte sowie der Höhe und Breite eines ausgetragenen Voxels der Schaumstruktur (10) während des Erzeugungsprozesses gemäß dem vorgegebenen 3D-Computermodell realisiert wird.

Die Erfindung betrifft zudem eine Vorrichtung zum computergestützten Erzeugen 3-dimensionaler Schaumstrukturen.

## Beschreibung

Die Erfindung betrifft ein Verfahren und eine Vorrichtung zum computergestützten Erzeugen 3-dimensionaler Schaumstrukturen aus einem Gemisch aus einem Polymerwerkstoff und einem Treibmittel. Bei dem Verfahren wird das Gemisch durch eine Extrusionseinheit transportiert, durch eine damit verbundene Düse extrudiert und dann auf einer Druckunterlage ausgetragen. Das Verfahren kann mit der Vorrichtung durchgeführt werden.

Polymerwerkstoffschäume weisen aufgrund ihrer zellartigen Struktur eine geringere Dichte als der Vollwerkstoff auf und sind dennoch stabil, weshalb sie für eine Vielzahl von Anwendungen geeignet sind. Polymerwerkstoffschäume finden als Mittellage in Sandwichkonstruktionen Verwendung, wie sie beispielsweise beim Bau von Rotorblättern für Windenergieanlagen genutzt werden. Da Polymerwerkstoffschäume auch geeignet sind, kinetische Energie zu absorbieren, werden sie auch als Crashstrukturen in Automobilen verwendet. Weitere Anwendungen finden Polymerwerkstoffschäume als Sonderverpackung für Großobjekte, wie beispielsweise Kunstobjekte, oder auch als leichtes Funktionsmaterial in individualisierten Orthesen. Als Unterkonstruktionen können diese Werkstoffe auch im Polstermöbelbau und im Yachtbau eingesetzt werden.

Polymerwerkstoffschäume entstehen vorrangig durch das Durchlaufen eines Expansionsvorgangs, welcher in drei Schritte eingeteilt werden kann. Zu Beginn der Schaumentstehung durchläuft der Polymerwerkstoff die Nukleierung, bei der sich an mit Treibmittel übersättigten Stellen Blasen bilden, daran schließt sich das Blasenwachstum und letztendlich die Stabilisierung an. Die Stabilisierung kann entweder durch chemische Vernetzung oder durch eine Erhöhung der Viskosität beziehungsweise Verfestigung aufgrund von Abkühlung erfolgen.

Zum Zeitpunkt der Schaumbildung muss sich das Polymer in einem fließfähigen Zustand befinden und es ist die Einbringung eines Treibmittels in den Polymerwerkstoff notwendig. Dieses Treibmittel kann durch eine Reaktion von Mehrkomponentensystemen geschaffen werden, wie es beispielsweise bei der Entstehung von Polyurethanen aus Isocyanaten und Polyolen geschieht. Alternativ kann das Treibmittel über chemische Stoffe und deren Zersetzung freigesetzt werden oder über die Einleitung physikalischer Treibmittel, wie Pentan, Stickstoff oder Kohlenstoffdioxid, realisiert werden.

Zur Herstellung von Polymerwerkstoffschäumen können sowohl Duroplaste als auch Thermoplaste und Elastomere verwendet werden, welche durch unterschiedliche Verfahren verarbeitet werden. Duroplastische Polymerwerkstoffschäume können durch eine Polyaddition oder durch eine Polymerisation von Mehrkomponentensystemen generiert werden. Im Gegensatz dazu werden thermoplastische Polymerwerkstoffschäume generell in anderen Verfahren hergestellt. Beim Spritzgießen beispielsweise werden die fließfähigen, mit Gas versetzten Thermoplaste in Formen gegossen und erstarren. Darüber hinaus können Schäumprozesse für Thermoplaste in Extrusionsprozessen realisiert werden.

Neben konventionellen Polymerwerkstoffen, wie Kunststoffen, ist auch eine Herstellung von Schäumen aus biobasierten Polymerwerkstoffen, also aus biobasierten Kunststoffen oder natürlichen Polymerwerkstoffen, wie Cellulose oder Stärke, vorteilhaft, da diese Materialien ressourcenschonender und nachhaltiger sind als die Polymerwerkstoffe auf Erdölbasis, da biobasierte Polymerwerkstoffe aus nachwachsenden Rohstoffen hergestellt werden. Ein weiteres Argument für die Verwendung von Biopolymerwerkstoffen ist, dass die Vorprodukte von duroplastischen Polymerwerkstoffen oft toxische Eigenschaften aufweisen, wie beispielsweise die Isocyanate zur Erzeugung von Polyurethan. Aus diesem Grund sind bei deren Verarbeitung oft hohe Sicherheitsvorkehrungen zu treffen und die zur Verarbeitung von Polyurethanschäumen benötigte Anlagentechnik ist sehr aufwändig und dementsprechend kostenintensiv.

Zum Erzeugen von Schäumen werden unterschiedliche Arten von Biopolymerwerkstoffen verwendet. Zum einen werden sogenannte "Drop-In"-Polymere eingesetzt, welche chemisch strukturgleich mit bestimmten Standardpolymerwerkstoffen sind, die jedoch aus Materialien mit einem biologischen Ursprung hergestellt werden. Dazu zählen beispielsweise Bio-PE (Bio-Polyethylen), Bio-PET (Bio-Polyethylenterephthalat) sowie Bio-PUR (Bio-Polyurethan). Auf die Standardpolymerwerkstoffe angewandte Schäumprozesse sind auch auf die strukturgleichen biobasierten "Drop-In"-Polymere übertragbar. So ist beispielsweise das Schäumen von Polylactiden oder Celluloseacetaten im Stand der Technik bekannt. Das Schäumen von Stärkeblends ist in diversen Druckschriften, beispielsweise in der DE 695 25 899 T2**,** in der US 6 627 752 B1**,** in der EP 1 942 139 A1 sowie in der WO 99 57181 A1 beschrieben.

Eine geeignete Möglichkeit Schaumstrukturen zu erzeugen, ist die Extrusion. Im Stand der Technik wird ein Verfahren zur Herstellung eines Schaumkörpers durch Extrusion und eine Extrusionsvorrichtung zur Herstellung eines Schaumkörpers in der DE 10 2013 008 202 A1 beschrieben. Besonders geeignet ist der Prozess und die Vorrichtung zur Verarbeitung von Thermoplasten, insbesondere auch von biobasierten Kunststoffen.

Zur Herstellung definierter Schaumstrukturen durch die beschriebenen Prozesse sind allerdings Formwerkzeuge notwendig, welche nur unter hohem Material-, Kosten- und Zeitaufwand hergestellt werden können. Außerdem fallen bei einem Wechsel der Werkzeuge Rüstzeiten an, womit ein zusätzlicher Zeit-und somit Kostenaufwand einhergeht. Dieser Nachteil fällt insbesondere dann ins Gewicht, wenn individualisierte Produkte oder generell geringe Stückzahlen gefertigt werden sollen. Des Weiteren ist eine räumliche Variation der Eigenschaften der Schaumstruktur, wie beispielsweise die Porengröße, schwierig zu realisieren.

Schaumstrukturen können auch mittels 3D-Druck-Prozessen erzeugt werden, wobei unterschiedliche Ansätze verfolgt werden. Eine erste Möglichkeit ist eine konstruktive Nachbildung einer zellartigen Schaumstruktur und deren anschließende Fertigung in einem konventionellen 3D-Druckprozess. Dabei werden Prozesse wie beispielsweise Lasersintern oder Schmelzschichtung (Fused deposition modeling) verwendet, wobei beim Lasersintern das Stützmaterial in der geschlossen zelligen Struktur enthalten bleibt, wodurch der Vorteil der Gewichtsreduktion bei Schäumen nicht genutzt werden kann. Eine weitere Möglichkeit stellt die Verwendung von zwei Komponenten während des Druckprozesses für Polymere oder Polymergemische dar. Dabei fungiert eine der Komponenten als Stützmaterial und wird nach dem Druckprozess entfernt, beispielsweise wird mittels Wasser ein wasserlösliches Material ausgespült. In der DE 20 2013 011 243 A1 ist ein Polymergemisch für den 3D-Druck zur Erzeugung von Objekten mit Poren-Strukturen offenbart. Charakteristisch ist hier, dass die zurückbleibende feste Struktur nur noch die offenporige strukturgebende Komponente enthält. Eine Schaumherstellung mittels dieser Prozesse ist jedoch ein sehr langsamer Vorgang, der zudem den Expansionseffekt von Schäumen nicht ausnutzt, wodurch die generierbaren Volumenströme gering sind.

In der US 2013/0295338 A1 ist ein Verfahren sowie ein Apparat zum computergestützten Druck mittels einer Sprühdüse und nachfolgendem Abfräsen eines Kunststoffschaumes beschrieben. Dabei wird der verwendete Kunststoff unter Druck gemeinsam mit einem geeigneten Treibmittel zur Sprühdüse geführt, wobei das Treibmittel bei einer chemischen Reaktion der Ausgangskomponenten des Kunststoffes freigesetzt wird. Das vorgestellte Verfahren ist für großtechnische Anlagen geeignet, sodass beispielsweise Formen für Hauswände erzeugt werden können. Es können unterschiedliche Materialien, wie Polyurethan aber auch biologisch abbaubaure Kunststoffe, verwendet werden. Zur Aushärtung der Kunststoffschäume werden optische Verfahren unter Nutzung von sichtbarem oder UV-Licht verwendet. Da Teile des Kunststoffschaumes nach einem Computermodell abgefräst werden, fallen jedoch hohe Abfallmengen an, was insbesondere den Materialaufwand und den Bearbeitungsaufwand erhöht. Außerdem ist der computergestützte Druck mit Hilfe von Härtung unter UV-Licht ein langsamer Prozess, der die Druckgeschwindigkeit limitiert. Der kontinuierliche Druckprozess kann bei Bahnunterbrechungen, insbesondere an Wendepunkten oder an Sprüngen zur nächsten Schicht, zu Problemen führen.

Zusammenfassend müssen nach dem Stand der Technik hergestellte Schäume entweder unter Nutzung aufwändig herzustellender Werkzeuge gegossen oder extrudiert werden oder aber der Schaum erhält seine Form durch trennende und spanende Bearbeitung, weshalb nachteilig hohe Abfallmengen anfallen und die Materialkosten sehr groß werden.

Die Aufgabe der Erfindung besteht darin eine Vorrichtung zur Verfügung zu stellen, welche effizient und kostengünstig eine Schaumstruktur ohne die Verwendung von Formwerkzeugen erzeugt, die eine Abbildung einer Konstruktionsvorgabe mit einer für die Anwendung ausreichenden Genauigkeit darstellt.

Die Aufgabe wird durch ein Verfahren und einen Gegenstand mit den Merkmalen der selbstständigen Patentansprüche gelöst. Weiterbildungen sind in den abhängigen Patentansprüchen angegeben.

Die Lösung der Aufgabe wird insbesondere durch ein Verfahren zum computergestützten Erzeugen 3-dimensionaler Schaumstrukturen gelöst. Dabei wird zuerst ein Gemisch aus einem Polymerwerkstoff und einem Treibmittel innerhalb einer Extrusionseinheit zu einer an der Extrusionseinheit angeordneten Düse transportiert und dem Gemisch aus dem Polymerwerkstoff und dem Treibmittel wird innerhalb der Extrusionseinheit thermische Energie zugeführt. Daraufhin wird das Gemisch unter erhöhtem Druck durch die Düse extrudiert. Nach dem Austritt aus der Düse wird das Gemisch entsprechend eines vorgegebenen 3D-Modells voxelweise auf eine Druckunterlage ausgetragen. Die Lage der Druckunterlage zu der davon beabstandet angeordneten Düse ist in drei Dimensionen variierbar und eine Einstellung der Eigenschaften, insbesondere der Dichte sowie der Höhe und Breite, eines ausgetragenen Voxels der Schaumstruktur wird während des Erzeugnisprozesses durch eine Steuerung des Treibmittelanteils und/ oder des Eintrags an thermischer Energie und/ oder der Austragsgeschwindigkeit gemäß dem vorgegebenen 3D-Modell realisiert. Insbesondere der Energieeintrag, der dem Gemisch aus dem Polymerwerkstoff und dem Treibmittel zugeführt wird, beeinflusst die Viskosität des Gemisches, was wiederum einen direkten Einfluss auf die Porengröße und die Stabilität der gedruckten Schaumstruktur hat.

In einem vorteilhaften Verfahren wird das Gemisch nach dem Austritt aus der Austragungseinheit entsprechend eines zugrunde liegenden 3D-Modells voxelweise auf einer Druckunterlage abgelegt. Das ermöglicht eine exakte Positionierung des Voxels.

Die Steuerung des Treibmittelanteils umfasst im Sinne der Erfindung auch die Steuerung des Anteils der einzelnen Komponenten des Gemisches an dem Gemisch. Eine Einstellung des Aufschäumvolumens und damit der Dichte eines ausgetragenen Voxels der Schaumstruktur während des Erzeugungsprozesses wird somit, insbesondere bei einem chemischen Schäumprozess, vorzugsweise durch die Steuerung des Mischungsverhältnisses der Komponenten des Gemisches realisiert.

Ein Gemisch ist im Sinne der Erfindung jegliche Mischung aus einem Polymerwerkstoff mit einem Treibmittel, sowohl vor als auch nach dem Aufschäumen. Eine Schaumstruktur ist ein aufgeschäumtes Gemisch, auch wenn sich das Treibmittel verflüchtigt hat. Das Gemisch kann auch eine Kombination aus mehreren Polymerwerkstoffen und/ oder mehreren als Treibmittel geeigneten Materialien enthalten.

Ein Voxel ist im Sinne der Erfindung ein Volumenelement, das einen Baustein der Schaumstruktur bildet. Eine mögliche Form eines Voxels ist ein länglich geformter Strang. Die Grundfläche und Form des Voxels sowie des Strangs wird auch durch die Form der Düse bestimmt. Voxel sind die kleinsten Einheiten, für die in dem Modell die Lage sowie die Größe und sonstige Eigenschaften, wie die Dichte, bestimmt werden können. Ein Voxel ist also ein 3-dimensionaler Teil eines Ganzen, aus dem das Ganze aufgebaut ist, wobei mehrere Schaumvoxel eine Schaumstruktur bilden. Die Größe eines solchen Voxels ist von den Eigenschaften des Polymerwerkstoffes und den Prozessparametern, wie dem verwendeten Treibmittel oder dem Energieeintrag abhängig. Die ausgetragenen Voxel oder Stränge werden vorteilhaft an geeigneten Stellen, wie beispielsweise Kanten oder Ecken der Schaumstruktur, abgetrennt, beispielsweise abgeschnitten.

Eine Druckunterlage ist in der Regel plattenförmig oder plan als Plattform realisiert. In einer alternativen Ausgestaltung weist die Druckunterlage eine gekrümmte Form auf.

Außerdem ist der Schäumprozess abhängig von der Treibmittelverteilung und der Viskosität des Grundmaterials. Aus diesem Grund kann die Schaumstruktur, insbesondere durch die spezielle Ausführung des Mischvorgangs, beispielsweise durch die passende Wahl einer Extruderschnecke innerhalb der Extrusionseinheit oder durch die Wahl eines geeigneten Polymerwerkstoffes, beeinflusst werden.

Ein Polymerwerkstoff umfasst im Sinne der Erfindung alle aus Monomerbausteinen aufgebauten Materialien, also sowohl Duroplaste als auch Elastomere und Thermoplaste, wobei insbesondere auch Bio-Polymerwerkstoffe und natürliche Polymere, wie beispielsweise Stärke, Lignin oder Cellulose, dazu zählen. Zum Schäumen der Polymerwerkstoffe wird ein Treibmittel benötigt, welches den Schäumprozess anregt und durch eine Übersättigung für eine Blasenbildung und darauffolgendes Blasenwachstum sorgt. Das Treibmittel kann dem Polymerwerkstoff entweder als physikalisches Treibmittel oder als chemische Komponente zugeführt werden. Beim Schäumen eines Materials findet dessen Expansion statt, sodass gasförmige Bläschen entstehen, die von festen oder flüssigen Wänden eingeschlossen sind. Es bilden sich zunächst an mit Treibmittel übersättigten Stellen Blasen, woraufhin das Blasenwachstum einsetzt und es dann über eine Temperaturänderung zu einer Stabilisierung der Blasen kommt. Die Stabilisierung kann durch eine Zufuhr von UV-Licht unterstützt werden.

Die Schaumstruktur ist die vollständig aufgeschäumte Struktur, also das vollständig aufgeschäumte Gemisch, dessen Expansion beendet ist.

Die Extrusionseinheit wird auch als Mischeinheit bezeichnet, da der Polymerwerkstoff und das Treibmittel, insbesondere bei Vorhandensein einer Extruderschnecke, in der Extrusionseinheit gemischt werden. Da der Polymerwerkstoff und das Treibmittel durch die Extrusionseinheit zur Düse befördert werden, kann die Extrusionseinheit auch als Transporteinheit bezeichnet werden.

Das erfindungsgemäße Verfahren wird computergestützt realisiert, was bedeutet, dass ein 3D-Modell als Computermodell vorgegeben wird, nach dem die Schaumstruktur erzeugt wird. In dem 3D-Computermodell werden sowohl die Lage als auch die Eigenschaften der einzelnen Volumenelemente, die auch als Voxel bezeichnet werden, definiert, es wird also festgelegt, wie die Schaumstruktur aufgebaut werden soll. Vorzugsweise wird die Größe und/ oder die Lage und/ oder die Dichte der einzelnen Schaumvoxel in dem Modell definiert.

Durch das erfindungsgemäße Verfahren kann eine einteilige Schaumstruktur erzeugt werden, welche räumlich variierende Eigenschaften, beispielsweise eine räumlich variierende Dichte, aufweist. Durch eine Änderung der Prozessparameter während des Erzeugungsprozesses können innerhalb der Schaumstruktur Bereiche höherer und Bereiche niedrigerer Dichte erzeugt oder ausgebildet werden. Die räumliche Variation der Eigenschaften ist dabei voxelweise, also von einem Voxel zu einem benachbarten Voxel, möglich. Das Erzeugen von Schäumen kann auch als Generieren oder Drucken bezeichnet werden.

Bevorzugt schäumt das Gemisch nach dem Austritt aus der Düse auf. Nach einer vorherigen Zufuhr thermischer Energie zu dem Gemisch wird das Gemisch durch die Düse extrudiert, wonach der auf das Gemisch einwirkende Druck reduziert ist und dadurch nach dem Austritt aus der Düse der Schäumprozess aktiviert wird. Das Aufschäumen wird dabei durch den Druckabfall hervorgerufen. Daraufhin wird das aufgeschäumte Gemisch auf die Unterlage ausgetragen. Unter dem Austritt des Gemisches aus der Düse wird der Vorgang des Durchtritts des Gemisches durch die Düsenöffnung verstanden. Das Gemisch wird dabei unter erhöhtem Druck durch die Düse gedrückt.

In einer alternativen Variante wird das Gemisch zunächst ungeschäumt auf die Unterlage ausgetragen und aufgrund einer zusätzlichen Zufuhr von oder eines zusätzlichen Eintrags an thermischer Energie wird der Aufschäumprozess aktiviert oder angeregt.

Vorteilhaft wird das Gemisch nach dem Austritt aus der Düse mittels einer Ablegeeinheit, die zwischen der Düse und der Druckunterlage angeordnet ist, auf der Druckunterlage abgelegt. Die Lage der Ablegeeinheit zur Druckunterlage ist in drei Dimensionen variierbar und die Ablegeeinheit weist eine Öffnung zum Durchtritt des Gemisches auf. Diese Öffnung ist vorzugsweise als Düse ausgeführt. Alternativ ist die Größe der Öffnung derart gestaltet, dass das Gemisch beim Passieren der Öffnung keinen Druckunterschied erfährt. Vorzugsweise weist die Ablegeeinheit ein Heizelement auf, mittels dessen dem Gemisch thermische Energie zugeführt werden kann.

In einer besonders bevorzugten Ausgestaltung wird das Gemisch nach dem Austritt aus der Düse in ein zwischen der Düse und der Ablegeeinheit angeordnetes Reservoir verbracht, wo es verbleibt, bis es mittels der Ablegeeinheit auf die Druckunterlage befördert und dort abgelegt wird.

Durch das Reservoir zwischen der Düse und der Ablegeeinheit ist es möglich, den kontinuierlich verlaufenden Extrusionsprozess aus der Düse mit dem diskontinuierlichen Austragungsprozess durch die Ablegeeinheit zu kombinieren. Insbesondere bei der Formung von Kanten oder Ecken der Schaumstruktur muss der Austragungs- oder Ablegeprozess kurz gestoppt werden, bevor eine Richtungsänderung des Austragungsprozesses umgesetzt werden kann. Um solche Diskontinuitäten zu kompensieren, kann das Gemisch in einem wie ein Puffer wirkenden Reservoir zwischengespeichert werden. Das Gemisch wird dann mittels der Ablegeeinheit auf der Druckunterlage abgelegt. Vorteilhaft kann der Ablegeprozess durch eine Geschwindigkeitsvariation und somit durch eine vom Extrusionsprozess abweichende Geschwindigkeit vom Extrusionsprozess entkoppelt werden. Die Extrusionseinheit ist dann über eine Pufferzone mit der Ablegeeinheit verknüpft.

Eine mögliche Variante sieht vor, dass eine Überwachung des Reservoirs mittels einer Erfassung des Druckes oder des Füllstandes zur Steuerung der Extrusionseinheit verwendet wird. Bei hohem Druck kann beispielsweise die Fördergeschwindigkeit in der Extrusionseinheit angepasst werden.

In einer Ausgestaltung wird mittels einer Kalibrierung der Höhe und/ oder der Breite und/ oder der Dichte des ausgetragenen Schaumvoxels auf Basis einer Temperaturregelung der Eintrag an thermischer Energie in das Polymerwerkstoff- und Treibmittelgemisch während des Erzeugungsprozesses eingestellt. Der Schäumgrad wird messtechnisch, beispielsweise über das Messen der Höhe oder Breite des ausgetragenen Voxels der Schaumstruktur, erfasst und ausgewertet, sodass anschließend eine Einstellung der Temperatur erfolgt. Eine Einstellung der Eigenschaften der Schaumvoxel, insbesondere der Dichte, sowie der räumlichen Abmessungen ist auch auf der Basis einer Regelung eines der anderen Prozessparameter, wie beispielsweise der Austragsgeschwindigkeit, möglich.

Vorteilhaft ist eine Einstellung der Höhe und der Breite des erzeugten und ausgetragenen Voxels der Schaumstruktur durch eine eindimensionale räumliche Begrenzung mittels eines Kalibrierelementes realisierbar. Eine räumliche Begrenzung führt dazu, dass die einzelnen Stränge in ihrer Form begrenzt sind. Die Geometrie des Kalibrierelementes hat dabei einen Einfluss auf die resultierende Schaumstruktur. Besonders bevorzugt können die Eigenschaften der Schaumstruktur mittels einer Heizung oder einer Kühlung, welche an dem Kalibrierelement angeordnet ist, zusätzlich beeinflusst werden. Durch eine Einstellung der Temperatur in Verbindung mit einer räumlichen Begrenzung kann der Schäumprozess erfasst und kontrolliert werden.

Zwischen dem Austragen zweier Stränge der Schaumstruktur wird in einer bevorzugten Variante zu der Verbindung der beiden Stränge ein Aktivatormaterial auf die bereits gedruckte Struktur ausgetragen. Das Aktivatormaterial kann dabei zwischen den Lagen, aber auch innerhalb der Lagen, zwischen den einzelnen Strängen der Lage, aufgetragen werden. Ein Austrag des Aktivatormaterials ist von oben, aber auch aus anderen Winkeln, beispielsweise von der Seite, möglich. Das Aktivatormaterial ist bevorzugt ein Haftvermittler wie beispielsweise Klebstoff.

Die oben genannte Aufgabe wird außerdem durch eine Vorrichtung zum computergestützten Erstellen 3-dimensionaler Schaumstrukturen aus einem Gemisch aus einem Polymerwerkstoff und einem Treibmittel gelöst, welche wenigstens eine Extrusionseinheit, eine mit der Extrusionseinheit verbundene Düse und eine Druckunterlage aufweist. Die Druckunterlage ist derart beabstandet von der Düse angeordnet, dass die Lage der Düse zur Druckunterlage in drei Dimensionen variierbar ist, wobei das Gemisch nach dem Austritt aus der Düse auf die Druckunterlage voxelweise ausgetragen wird. Außerdem weist die Vorrichtung eine Steuereinheit auf, welche während des Erzeugungsprozesses zur Steuerung des Treibmittelanteils und/ oder des Eintrags an thermischer Energie in das Gemisch aus Polymerwerkstoff und Treibmittel und/ oder der Austragsgeschwindigkeit geeignet ist, um die Dichte sowie die Höhe und Breite des ausgetragenen Voxels der Schaumstruktur einzustellen. Die Steuereinheit ist in einer Variante modular aufgebaut. Dabei findet eine Aktivierung des Schäumprozesses entweder durch den Druckabfall nach dem Austritt aus der Düse statt oder dem Gemisch wird nach dem Austrag auf die Druckunterlage mittels eines Aktivierungselementes zusätzliche thermische Energie zugeführt, wodurch das Schäumen in Gang gesetzt wird. Vorteilhaft ist an der Extrusionseinheit ein Heizelement angeordnet, mit dem dem Gemisch thermische Energie zugeführt werden kann.

Der Austrag aus der Vorrichtung erfolgt bevorzugt durch ein Ablegen des Gemisches auf der Druckunterlage. Dadurch wird die Position des Voxels exakt vorgegeben.

Vorzugsweise ist die Steuereinheit ferner geeignet den Anteil der einzelnen Komponenten des Gemisches an dem Gemisch zu steuern.

Eine Variation der Eigenschaften der Schaumstruktur ist voxelweise, also von einem Voxel zu einem benachbarten, möglich. Die Lage der einzelnen Voxel kann in dem 3D-Computermodell festgelegt werden und die erfindungsgemäße Vorrichtung kann computergestützt eine Schaumstruktur erzeugen oder generieren. Vorzugsweise sind mittels einer Steuereinheit Schaumstränge definierter Größe und Struktur im laufenden Druckprozess durch eine gezielte Anpassung der Prozessparameter Energieeintrag, Treibmittelanteil und Druckgeschwindigkeit einstellbar.

Die Variation der Lage der Düse zur Druckunterlage wird vorzugsweise durch Linearführungen in mehreren Achsen realisiert. Dabei ist entweder die Düse beziehungsweise der Druckkopf oder die Druckunterlage, die auch als Bauplattform bezeichnet wird, bewegbar oder aber es sind sowohl die Düse als auch die Druckunterlage bewegbar. Beispielsweise kann die Druckplattform vertikal bewegbar sein und die Lage der Düse ist in zwei horizontalen Achsen variierbar. Alternativ kann eine Bewegbarkeit der Düse oder der Druckunterlage in allen drei räumlichen Dimensionen die Variation der Lage der Düse zur Druckunterlage während des Druckprozesses gewährleisten. In einer besonderen Ausführung sind die Linearführungen in mehreren Achsen mittels eines daran angeordneten Motors betrieben. Durch eine Anpassung der Geschwindigkeit der Lagevariation über eine am Motor angeordnete Steuereinheit kann in einer bevorzugten Variante die Austragsgeschwindigkeit variiert werden.

Bevorzugt ist an der Vorrichtung eine Ablegeeinheit zwischen der Düse und der Druckunterlage angeordnet. Die Lage dieser Ablegeeinheit zur Druckunterlage ist in drei Dimensionen variierbar, sodass die Ablegeeinheit die Schaumvoxel entsprechend dem 3D-Computermodell auf die Druckunterlage austragen kann. Vorteilhaft weist die Ablegeeinheit eine Öffnung, beispielsweise in Form einer Düse, auf, durch die das Gemisch hindurchtritt oder aus der das Gemisch austritt. In einer möglichen Variante weist die Ablegeeinheit ein Heizelement, beispielsweise in Form eines Heizbandes, auf, mit welchem dem Gemisch thermische Energie zugeführt werden kann.

Zwischen der Düse und der Verlegeeinheit ist vorteilhafterweise ein Reservoir angeordnet, welches zur Zwischenspeicherung des Gemisches angeordnet ist.

Das Gemisch kann in dem Reservoir, das wie ein Puffer wirkt, gespeichert werden, sodass die Prozesse des Austritts aus der Düse und das Ablegen auf der Druckunterlage entkoppelt sind. Diese Prozesse sind somit unabhängig voneinander durchführbar. Das Reservoir ist bevorzugt als Behälter ausgeführt, in den das Gemisch hinein geschäumt oder verbracht wird und aus dem es für den Ablegeprozess heraus befördert oder gezogen wird.

In einer vorteilhaften Ausgestaltung weist die Vorrichtung mehrere Extrusionseinheiten mit daran angeordneten Düsen auf. Die Anwendung von mehreren Extrusionseinheiten führt zu einer zuverlässigen und einfachen Variation der Schaumeigenschaften, da unterschiedliche Schäume abwechselnd aufgetragen werden können. Eine Variation in Größe und Form der unterschiedlichen Düsen stellt eine besondere Ausführung dar. Es können aber auch weitere Parameter wie das verwendete Material oder der Energieeintrag zwischen den einzelnen Extrusionseinheiten variiert werden. So ist es möglich, die Reproduzierbarkeit des Schaumaustrages zu verbessern, da eine räumliche Variation der Schaumstruktur auch ohne Einstellungsänderungen an den einzelnen Extrusionseinheiten mittels eines Wechsels zwischen den Extrusionseinheiten möglich ist.

Zur Erzeugung einer tragfähigen Struktur ist eine feste Verbindung zwischen den einzelnen Schaumsträngen notwendig. Um eine Anbindung weiterer Schaumstränge an die bereits erzeugten und ausgetragenen zu erreichen und somit deren Verbindung zu unterstützen, sind insbesondere extra aufgetragene Aktivatormaterialien geeignet, wie beispielsweise Klebstoff. In einer vorteilhaften Variante ist an der Vorrichtung somit eine Aktivatorzuführung und ein damit verbundenes Aktivatoraustragselement angeordnet, mit Hilfe dessen ein Aktivator zur Verbindung der Schaumstränge miteinander oder zur Verbindung der einzelnen Lagen von Schaumsträngen auf die bestehende Schaumstruktur aufgetragen wird. Generell kann der Aktivator entweder ein Haftvermittler wie beispielsweise Klebstoff sein, der zwischen dem Austrag zweier zu verbindender Stränge oder Schichten aufgebracht wird, und/ oder eine Aktivierung des Verbindungsprozesses erfolgt über zugeführte thermische Energie, welche über ein an der Extrusionseinheit angeordnetes Energieaustragselement der gedruckten Schaumstruktur zugeführt wird. Eine Verbindung der Schaumstränge aufgrund von zusätzlich zugeführter thermischer Energie vor einem Auftrag der nachfolgenden Schicht beziehungsweise des nachfolgenden Schaumvoxels oder Schaumstranges nutzt Schweiß- oder Sinterprozesse, sodass dadurch eine Verbindung der Schaumstränge beziehungsweise der Schaumlagen realisiert wird. In einer besonders vorteilhaften Variante kann auf einen Aktivator verzichtet werden, da ein Prozess zur Verbindung der Polymerwerkstoffschichten bereits durch die erhöhte Temperatur des aufzulegenden Voxels angeregt beziehungsweise aktiviert wird. Die Elemente der Aktivierungseinheit, also die Aktivatorzuführung und das daran angeordnete Aktivatoraustragselement sind vorzugsweise durch eine an der Vorrichtung angeordnete Mehrachsmitführung positionierbar, sodass ein Aktivatoraustrag nicht nur nach unten, sondern unter beliebigen Winkeln möglich ist.

Das Gemisch aus dem Polymerwerkstoff und dem Treibmittel wird innerhalb der Extrusionseinheit zur Düse gefördert. Bevorzugt weist die Vorrichtung innerhalb der Extrusionseinheit zur Förderung des Gemisches aus dem Polymerwerkstoff und dem Treibmittel eine Filamentförderung oder eine Extruderschnecke auf. Bei der Filamentförderung wird ein Halbzeug, also ein Polymerstrang mit einem bereits zugesetzten Treibmittel mittels Profilrädern gefördert. Eine Extruderschnecke ist vorteilhafterweise dafür geeignet, den Polymerwerkstoff mit dem Treibmittel, wie beispielsweise einem eingeleiteten Gas, zu vermischen. Beim Durchlaufen der Extrusionseinheit wird bevorzugt mechanische Energie zugeführt. Vorteilhaft kommt es zu einem weiteren Energieeintrag durch elektromagnetische Strahlung, wie UV-Strahlung.

In einer bevorzugten Ausgestaltung ist an der Vorrichtung ein Abstandsbestimmungssensor zum Messen des Abstandes vom Abstandsbestimmungssensor zur ausgetragenen Schaumstruktur angeordnet.

Dadurch kann eine Breite oder eine Höhe der einzelnen Schaumstränge ermittelt werden. Die Höhe des Voxels lässt Rückschlüsse über den Schäumgrad zu, sodass die ermittelte Höhe für ein Kalibrierverfahren zur Einstellung der Prozessparameter geeignet ist.

Der verwendete Polymerwerkstoff ist vorzugsweise ein Thermoplast und in einer besonderen Variante ein biobasierter Thermoplast, wie beispielsweise ein Stärkeblend, Bio-Polyethylen, Celluloseacetat, Bio-Polyethylenterephthalat oder Blends aus Polylactiden.

Um das Gemisch aus einem Polymerwerkstoff und einem Treibmittel zur Verfügung zu stellen, kann in einer Ausführungsvariante das Treibmittel als chemische Komponente im Polymerwerkstoff eingebunden sein, wie beispielsweise bei der Verwendung von Zitronensäure in einem Thermoplast. Alternativ kann das Treibmittel als Treibgas in den Polymerwerkstoff eingebracht werden, was beispielsweise bei der Einbringung von Pentan in einen Thermoplast realisiert wird. Der additivierte Thermoplast, also der mit Additiven versehene Thermoplast, liegt vorzugsweise als Granulat oder als Filament vor. Die Zufuhr des Treibmittels kann über dieselbe Schnittstelle wie die des Polymerwerkstoffes erfolgen oder aber alternativ über einen separaten Port gewährleistet werden.

Erfindungsgemäß werden in schnellen Druckprozessen leichte, lasttragende Strukturen erstellt. Aufgrund der Expansion des Polymerwerkstoffmaterials nach dem Austritt aus der Düse ist ein hoher Volumenstrom beim Austrag der Schaumstrukturen realisierbar.

Außerdem werden bei der Erzeugung von Schaumstrukturen mit der erfindungsgemäßen Vorrichtung oder nach dem erfindungsgemäßen Verfahren keine weiteren Werkzeuge, wie beispielsweise Gießformen oder Fräswerkzeuge, benötigt. Dadurch wird die Effizienz und somit die Wirtschaftlichkeit der Fertigung insbesondere kleiner Losgrößen merklich erhöht. Werkzeugkosten und Rüstzeiten können eingespart werden und auch ökologisch ist der Wegfall des Material- und Energieaufwandes für die Werkzeugfertigung von Vorteil. Es ist nur in wenigen Fällen eine Nachbearbeitung notwendig, da bei Einsatz der erfindungsgemäßen Vorrichtung nur dort Schaum erzeugt wird, wo er benötigt wird. Aufgrund dessen wird der Materialaufwand und somit die Materialkosten erheblich gesenkt. Des Weiteren findet eine Reduzierung der Abfallmengen statt, sodass sich auch die Abfallentsorgungskosten verringern.

Vorteilhaft können die Eigenschaften der erzeugten Schaumstruktur räumlich innerhalb der Schaumstruktur variiert werden. Unterschiedliche Dichten oder Festigkeiten in verschiedenen Bereichen der Schaumstruktur sind ein großer Vorteil gegenüber dem Stand der Technik. Es gelingt im 3D-Druck ein integraler Aufbau gedruckter Schäume, sodass in bestimmten Bereichen festere Strukturen zur besseren Lastaufnahme eingefügt werden können, ohne das Gewicht der gesamten Schaumstruktur mehr als nötig zu erhöhen. Dadurch wird insbesondere die Montagezeit eingespart, die beim Zusammensetzen einzelner Bestandteile notwendig wäre.

Das Verfahren und die Vorrichtung sind vorteilhaft geeignet, auch Thermoplastische Elastomere zu verarbeiten. Die erzeugten Weichschäume können insbesondere biobasiert sein.

Konzeptionsgemäß sind das Verfahren und die Vorrichtung geeignet, gemäß einer vorgegebenen Konstruktion aus einem Polymerwerkstoff und einem geeigneten Treibmittel eine belastbare Schaumstruktur zu erzeugen. Dabei wird das Polymerwerkstoff-Treibmittel-Gemisch durch eine Extrusionseinheit befördert und unter Druck durch eine Düse extrudiert. Aufgrund eines Eintrags an thermischer Energie schäumt der Polymerwerkstoff auf. Das Gemisch wird voxelweise auf einer Druckunterlage ausgetragen. Durch eine präzise Einstellung der Prozessparameter können die Eigenschaften der gedruckten Struktur räumlich variiert werden, sodass speziell auf den Anwendungsfall optimierte Schaumstrukturen, mit beispielsweise räumlich variierender Porösität, generiert werden können.

Der Schäumprozess ist unter anderem abhängig vom Treibmittelanteil, vom Energieeintrag, von der Druckgeschwindigkeit, von der Treibmittelverteilung im Polymerwerkstoff sowie von der Viskosität des Grundmaterials. Der verwendete Polymerwerkstoff, vorzugsweise ein Thermoplast, wird innerhalb der Extrusionseinheit durch einen Energieeintrag, also durch die Zuführung von Wärme, aufgeschmolzen. Die Schmelzviskosität kann dabei durch eine Variation der Temperatur eingestellt werden. Der Schäumprozess wird dann entweder durch einen Druckabfall an der Düsenöffnung aktiviert oder aber es findet eine nachträgliche Aktivierung des ausgetragenen Voxels auf der Druckunterlage mittels Zufuhr von thermischer Energie statt.

Die Verfestigung des aufschäumenden Materials ist abhängig von den Umgebungsbedingungen, wobei besonders die Umgebungstemperatur einen großen Einfluss hat. Weitere entscheidende Parameter sind hierbei die Schmelzviskosität des Polymerwerkstoffes, die Geometrie der Düse und die Austragsgeschwindigkeit.

Durch eine Kontrolle des Schäumprozesses kann eine räumliche Variation der Schaumeigenschaften, welche auch als Gradierung der Eigenschaften einer Schaumstruktur bezeichnet wird, erfolgen. Prozessparameter wie die Drucktemperatur, die Druckgeschwindigkeit und die Vorschubgeschwindigkeit ermöglichen eine präzise Einstellung der Eigenschaften. Die Kontrolle der Treibmittelbeladung, der Fließeigenschaften des Polymerwerkstoffes und des Abkühlprozesses sind weitere entscheidende Parameter, die die Eigenschaften der resultierenden Schaumstruktur beeinflussen.

Der Austrag der Voxel erfolgt vorteilhaft mittels eines zweiten Austragselements als Ablegeeinheit. In ein zwischen der ersten und der zweiten Düse angeordnetes Reservoir wird das Gemisch aus Polymerwerkstoff und Treibmittel kontinuierlich eingetragen. Der Prozess des Ablegens des Gemisches auf der Druckunterlage kann davon unabhängig diskontinuierlich erfolgen.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- **Fig. 1:**: Ein erstes Ausführungsbeispiel mit einer Extrusionseinheit und einer räumlichen Kalibrierbegrenzung,
- **Fig. 2:**: Ein zweites Ausführungsbeispiel mit zwei Extrusionseinheiten und einer messtechnischen Kalibrierung
- **Fig. 3:**: Ein drittes Ausführungsbeispiel mit einer Extrusionseinheit und einer zusätzlichen Ablegeeinheit und
- **Fig. 4:**: Ein viertes Ausführungsbeispiel mit einer Extrusionseinheit und einem Aktivierungselement zur nachträglichen Aktivierung des Schäumprozesses.

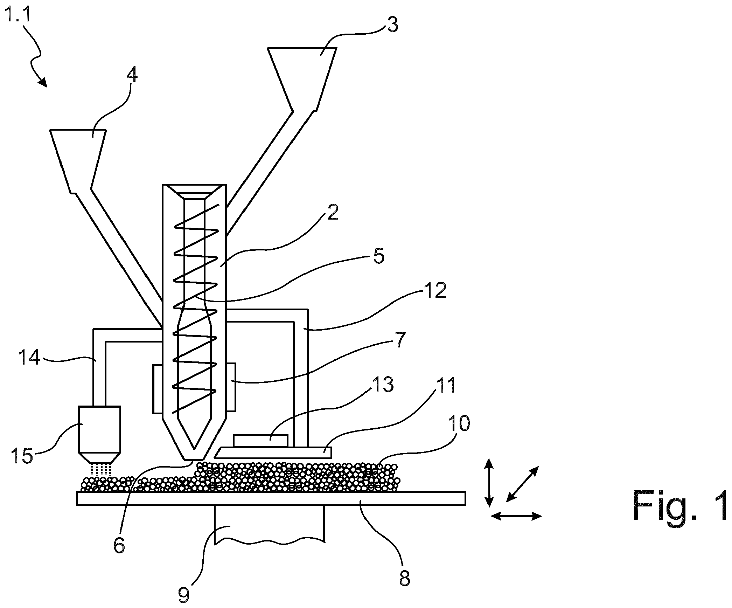

In **Fig. 1** ist ein Ausführungsbeispiel der erfindungsgemäßen Vorrichtung 1.1 zum Generieren von tragfähigen Schäumen dargestellt. Das Kernstück der Vorrichtung 1.1 bildet eine Extrusionseinheit 2, an der eine Polymerwerkstoffzuführeinheit 3 sowie eine Treibmittelzuführeinheit 4 angeordnet sind. Nach dem Zuführen von einem Polymerwerkstoff und einem geeigneten Treibmittel bildet sich innerhalb der Extrusionseinheit 2 ein Gemisch aus den beiden Komponenten aus. Der Mischvorgang wird in dieser Anordnung durch die als Extruderschnecke ausgebildete Transportvorrichtung 5 unterstützt, welche dazu dient, das Gemisch durch die Extrusionseinheit 2 hindurch bis zur Düse 6 zu transportieren. Das Gemisch aus dem Polymerwerkstoff und dem Treibmittel wird mittels der Transportvorrichtung 5 unter Druck durch die Düse 6 hindurch extrudiert und ein nach dem Passieren der Düse 6 auf das Gemisch einwirkender Druckabfall verursacht eine Aktivierung des Schäumprozesses. Um ein Schäumen nach dem Passieren der Düse 6 zu ermöglichen ist allerdings ein vorheriger Energieeintrag in das Gemisch notwendig. Um die thermische Energie dem Gemisch aus dem Polymerwerkstoff und dem Treibmittel zuzuführen, sind an der Extrusionseinheit 2 mehrere Heizelemente 7 angeordnet.

Unterhalb der Düse 6 ist eine Druckunterlage 8 angeordnet, welche über eine mehrachsige Linearführung 9 in zwei horizontalen Dimensionen und einer vertikalen Dimension verstellbar ausgebildet ist. Durch diese Verstellbarkeit der Druckunterlage 8 ist es möglich, das gedruckte Schaumvoxel exakt zu positionieren und somit die Form der gedruckten Schaumstruktur 10 festzulegen.

An der Extrusionseinheit 2 ist des Weiteren ein Kalibrierelement 11 angeordnet, das über ein Kalibrierverbindungselement 12 mit der Extrusionseinheit 2 verbunden ist. Das Kalibrierelement 11 dient der räumlichen Begrenzung der Schaumstruktur 10, wobei es in diesem Ausführungsbeispiel die Expansion des Schaumes nach oben begrenzt und sich der expandierende Schaum horizontal ausdehnt. Mittels eines oberhalb des Kalibrierelementes 11 angeordneten Kalibrierheizelementes 13 kann der Expansions- und der Abkühlvorgang weiter beeinflusst werden. Das Kalibrierheizelement 11 ist in der Lage, der Schaumstruktur entweder thermische Energie zuzuführen oder aber zu entziehen; es ist also geeignet das Kalibrierelement 11 und somit die Schaumstruktur 10 zu heizen oder zu kühlen.

Die Schaumstruktur 10 wird vorzugsweise lagenweise ausgetragen, weshalb die Verbindung der verschiedenen Lagen essenziell für eine Gewährleistung der Tragfähigkeit der gedruckten Schaumstruktur 10 ist. Zur Stimulierung des Verbindungsprozesses ist ein Aktivator geeignet, welcher beispielsweise mittels der Zuführung von thermischer Energie eine Verbindung der Schaumschichten hervorruft oder aber, wie in diesem Ausführungsbeispiel, mittels eines geeigneten Klebstoffes eine Verbindung der einzelnen Lagen unterstützt. Der Klebstoff wird mittels eines Aktivatoraustragselementes 15, das über eine Aktivatorzuführung 14 mit der Extrusionseinheit 2 verbunden ist, zwischen dem Austrag zweier Lagen auf die gedruckte Schaumstruktur 10 aufgetragen, sodass die nachfolgend gedruckte Lage auf der darunter liegenden fixiert wird.

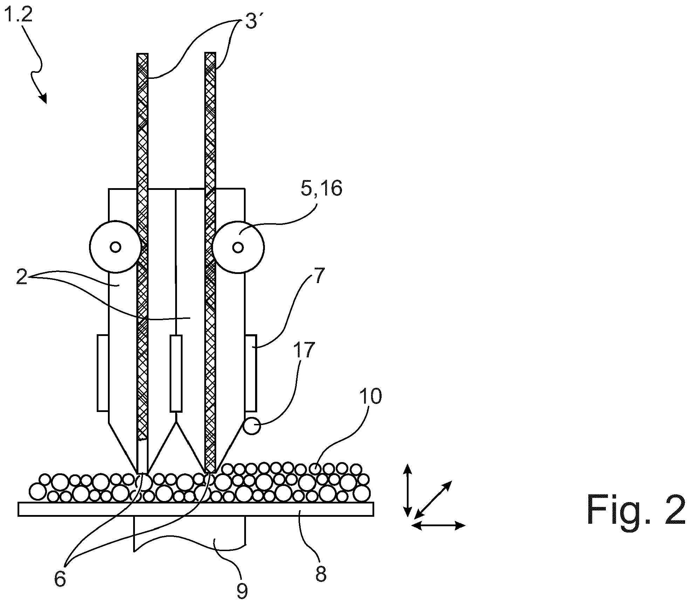

Eine alternative Variante der Vorrichtung 1.2 umfasst eine Kombination aus zwei Extrusionseinheiten 2 und ist in **Fig 2** dargestellt. Innerhalb der Extrusionseinheiten sind die Transportvorrichtungen 5 als Filamentförderung ausgeführt, welche in der Lage sind, ein Polymerwerkstofffilament 3', das als Halbzeug bereits aus einem Polymerwerkstoff und einem Treibmittel besteht, durch die jeweilige Extrusionseinheit 2 zur Düse 6 zu befördern. Die Filamentförderung umfasst dabei ein rotierendes, profiliertes Förderrad 16, welches gegen das Polymerwerkstofffilament 3' drückt und aufgrund der zwischen Förderrad 16 und Polymerwerkstofffilament 3' auftretenden Kräfte, wie Reibung, das Polymerwerkstofffilament 3' über die Drehbewegung transportiert.

Auch in diesem Ausführungsbeispiel gewährleisten an den Extrusionseinheiten 2 angeordnete Heizelemente 7 eine Zufuhr von thermischer Energie in das Polymerwerkstofffilament 3', sodass es aufgeschmolzen wird, bevor es zur Düse 6 gelangt und unter Druck durch diese hindurch extrudiert wird. Wie in den Ausführungen zu Fig. 1 beschrieben, so wird auch in diesem Beispiel die Schaumstruktur auf einer durch eine Linearführung in mehreren Achsen 9 verstellbaren Druckunterlage 8 ausgebracht.

Eine schnelle und effiziente Änderung der Eigenschaften der Schaumstruktur 10 wird durch die Möglichkeit zum Wechsel zwischen den beiden Extrusionseinheiten 2 gewährleistet. Diverse Einstellmöglichkeiten beeinflussen die Schaumeigenschaften, wobei besonders die Geometrie der Düse 6, die Wahl des Polymerwerkstoffes, der Anteil des Treibmittels im Halbzeug sowie Änderungen des Druckes oder der Temperatur Variationen der Eigenschaften zwischen den Schaumvoxeln ermöglichen.

Zur Erfassung der Schaumeigenschaften wird in dieser Ausführungsform ein Kalibriermechanismus angewandt, welcher über einen an einer der Extrusionseinheiten 2 angeordneten Abstandbestimmungssensor 17 die Expansion eines Schaumvoxels erfasst und eine entsprechende Regelung des Expansionsgrades, beispielsweise über eine Änderung der Temperatur, erlaubt. Die Kalibrierung schafft die Voraussetzungen für eine exakte Abbildung der vorgegebenen Struktur, sodass auf eine anschließende mechanische Bearbeitung verzichtet werden kann.

Durch die an der Extrusionseinheit 2 angeordneten Heizelemente 7 kann auch die Temperatur des ausgetragenen Schaums erhöht werden, sodass eine Verbindung zwischen den einzelnen Lagen der Schaumstruktur unterstützt wird. Auf die Anwendung eines Klebstoffs kann verzichtet werden, da eine erhöhte Temperatur der ausgetragenen Lage auch die darunter befindliche Lage derart erwärmt, dass ein Verbindungsprozess zwischen den beiden Lagen angeregt wird.

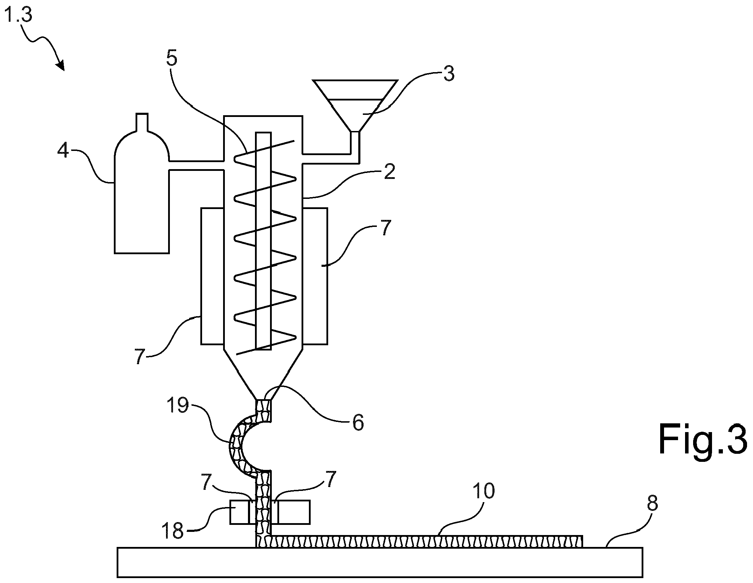

In **Fig. 3** ist eine weitere Alternative der Vorrichtung 1.3 mit einer zusätzlichen Ablegeeinheit 18 dargestellt. In dieser Variante wird der Polymerwerkstoff über die Polymerwerkstoffzuführeinheit 3 und das Treibmittel über die Treibmittelzuführeinheit 4 in die Extrusionseinheit 2 eingeleitet. Mittels der Transportvorrichtung 5, welche in diesem Ausführungsbeispiel als Extruderschnecke ausgeführt ist, werden der Polymerwerkstoff und das Treibmittel vermischt und zur Düse 6 transportiert. Dem Gemisch aus Polymerwerkstoff und Treibmittel wird über die Heizelemente 7 die für den späteren Schäumprozess notwendige, thermische Energie zugeführt. Nach dem Austritt aus der Düse 6 schäumt der Polymerwerkstoff auf und die Schaumstruktur 10 wird durch eine Ablegeeinheit 18 auf der Druckunterlage 8 abgelegt. Die Schaumstruktur 10, die kontinuierlich aus der Düse 6 austritt, wird in einem Reservoir 19, das sich zwischen der Düse 6 und der Ablegeeinheit 18 befindet, zwischengespeichert. In diesem Ausführungsbeispiel wird der Weg des Gemisches zwischen der Düse 6 und der Ablegeeinheit 18 entsprechend variiert beziehungsweise angepasst. Das Reservoir 19 fungiert wie ein Puffer, der die bereits aus der Düse 6 ausgetretene, aber noch nicht auf der Druckunterlage 8 abgelegte Schaumstruktur 10 aufnimmt. Bei einer Unterbrechung des Ablegevorgangs muss der Austritt des Gemisches aus der Düse 6 nicht unterbrochen werden, sondern das Gemisch kann in dem Reservoir 19 verbleiben, bis es durch die Ablegeeinheit 18 auf die Druckunterlage 8 verbracht wird. Beim Durchtritt des Gemisches durch die Ablegeeinheit 18 wird dem Gemisch mittels zusätzlicher Heizelemente 7, die an der Ablegeeinheit 18 angeordnet sind, thermische Energie zugeführt.

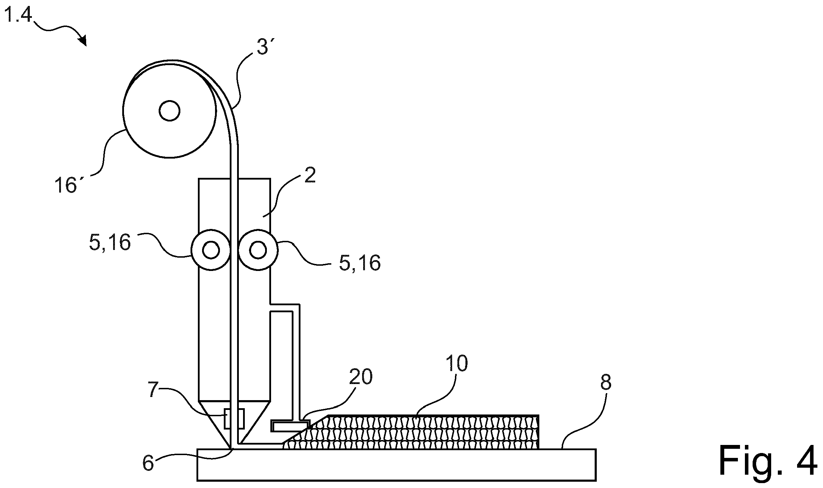

Eine mögliche Ausführung der Vorrichtung 1.4, bei der der Schäumprozess des Gemisches nach dem Ablegen auf die Druckunterlage 8 nachträglich aktiviert wird, ist in **Fig. 4** dargestellt. Ein Polymerwerkstofffilament 3', das sowohl einen Polymerwerkstoff als auch ein Treibmittel enthält, wird mit Hilfe einer externen Filamentspule 16', das sich außerhalb der Extrusionseinheit 2 befindet, in die Extrusionseinheit 2 befördert. Mittels weiterer Transportvorrichtungen 5, welche ebenfalls als Förderräder 16 ausgeführt sind, wird das Polymerwerkstofffilament 3' in Richtung der Düse 6 befördert. Vor dem Erreichen der Düse 6 passiert das Polymerwerkstofffilament 3' ein Heizelement 7, durch welches dem Polymerwerkstofffilament 3' thermische Energie zugeführt wird. Nach dem Austritt aus der Düse, wenn das Polymerwerkstofffilament 3' die Düsenöffnung passiert hat, wird das Gemisch, also das Polymerwerkstofffilament 3', auf der Druckunterlage 8 abgelegt. Durch ein außerhalb der Extrusionseinheit 2 angeordnetes Aktivierungselement 20 wird dem abgelegten Gemisch weitere Energie zugeführt. Diese zusätzliche Energie aktiviert das Aufschäumen des Polymerwerkstoffes, sodass eine Schaumstruktur 10 entsteht. Das Gemisch aus Polymerwerkstoff und Treibmittel wird ungeschäumt auf der Druckunterlage abgelegt und das Schäumen wird dann danach durch eine zusätzliche Energiezufuhr mittels des Aktivierungselementes 20 realisiert.

### Bezugszeichenliste

- 1.1: Vorrichtung
- 1.2: Vorrichtung mit zwei Extrusionseinheiten
- 1.3: Vorrichtung mit Ablegeeinheit
- 1.4: Vorrichtung mit nachträglicher Aktivierung des Schäumprozesses
- 2: Extrusionseinheit
- 3: Polymerwerkstoffzuführeinheit
- 3': Polymerwerkstofffilament
- 4: Treibmittelzuführeinheit
- 5: Transportvorrichtung
- 6: Düse
- 7: Heizelement
- 8: Druckunterlage
- 9: Linearführung in mehreren Achsen
- 10: Schaumstruktur
- 11: Kalibrierelement
- 12: Kalibrierverbindungselement
- 13: Kalibrierheizelement
- 14: Aktivatorzuführung
- 15: Aktivatoraustragselement
- 16: Förderrad
- 16': Filamentspule
- 17: Abstandbestimmungssensor
- 18: Ablegeeinheit
- 19: Reservoir
- 20: Aktivierungselement

## Patentansprüche

1. Verfahren zum computergestützten Erzeugen 3-dimensionaler Schaumstrukturen, bei dem
- ein Gemisch aus einem Polymerwerkstoff und einem Treibmittel innerhalb einer Extrusionseinheit (2) zu einer an der Extrusionseinheit (2) angeordneten Düse (6) transportiert wird,
- dem Gemisch aus Polymerwerkstoff und Treibmittel innerhalb der Extrusionseinheit (2) thermische Energie zugeführt wird,
- das Gemisch unter erhöhtem Druck durch die Düse (6) extrudiert wird,
- das Gemisch entsprechend eines vorgegebenen 3D-Computermodells voxelweise auf eine Druckunterlage (8) ausgetragen wird, wobei
- die Lage der Druckunterlage (8) zu der davon beabstandet angeordneten Düse (6) in drei Dimensionen variierbar ist und
- durch eine Steuerung des Treibmittelanteils und/ oder des Eintrags an thermischer Energie und/ oder der Austragsgeschwindigkeit eine Einstellung der Dichte sowie der Höhe und Breite eines ausgetragenen Voxels der Schaumstruktur (10) während des Erzeugungsprozesses gemäß dem vorgegebenen 3D-Computermodell realisiert wird.

2. Verfahren nach Anspruch 1, **dadurch gekennzeichnet, dass** das Gemisch nach dem Austritt aus der Düse aufschäumt.

3. Verfahren nach Anspruch 1, **dadurch gekennzeichnet, dass** das Gemisch nach dem Austrag auf die Druckunterlage (8) und einer zusätzlichen Zufuhr an thermischer Energie aufschäumt.

4. Verfahren nach einem der Ansprüche 1 bis 3, **dadurch gekennzeichnet, dass** das Gemisch nach dem Austritt aus der Düse (6) mittels einer zwischen der Düse (6) und der Druckunterlage (8) angeordneten Ablegeeinheit (18), deren Lage zur Druckunterlage (8) in drei Dimensionen variierbar ist, auf der Druckunterlage (8) abgelegt wird, wobei die Ablegeeinheit (18) eine Öffnung zum Durchtritt des Gemisches aufweist.

5. Verfahren nach Anspruch 4, **dadurch gekennzeichnet, dass** das Gemisch nach dem Austritt aus der Düse (6) in ein zwischen der Düse (6) und der Ablegeeinheit (18) angeordnetes Reservoir (19) verbracht wird, wo es verbleibt, bis es mittels der Ablegeeinheit (18) auf die Druckunterlage (8) befördert und dort abgelegt wird.

6. Verfahren nach einem der Ansprüche 1 bis 5, **dadurch gekennzeichnet, dass** eine Kalibrierung der Höhe und/ oder der Breite und/ oder der Dichte des ausgetragenen Schaumvoxels auf Basis einer Temperaturregelung während des Erzeugungsprozesses zur Beeinflussung des Eintrags an thermischer Energie in das Polymerwerkstoff- und Treibmittelgemisch realisiert wird.

7. Verfahren nach einem der Ansprüche 1 bis 6, **dadurch gekennzeichnet, dass** eine Einstellung der Höhe und der Breite des erzeugten und ausgetragenen Voxels der Schaumstruktur (10) durch eine eindimensionale räumliche Begrenzung mittels eines Kalibrierelementes (11) realisiert wird.

8. Verfahren nach einem der Ansprüche 1 bis 7, **dadurch gekennzeichnet, dass** zwischen dem Austragen zweier Stränge der Schaumstruktur (10) zu deren Verbindung ein Aktivatormaterial auf die bereits ausgetragene Struktur aufgetragen wird.

9. Vorrichtung (1.1, 1.2, 1.3, 1.4) zum computergestützten Erzeugen 3-dimensionaler Schaumstrukturen (10) aus einem Gemisch aus Polymerwerkstoff und Treibmittel, mindestens eine Extrusionseinheit (2) und eine damit verbundene Düse (6) aufweisend, **dadurch gekennzeichnet, dass** eine Druckunterlage (8) derart beabstandet von der Düse (6) angeordnet ist, dass die Lage der Düse (6) zur Druckunterlage (8) in drei Dimensionen variierbar ist, wobei das Gemisch nach dem Austritt aus der Düse (6) auf der Druckunterlage (8) voxelweise ausgetragen wird, wobei die Vorrichtung (1.1, 1.2, 1.3, 1.4) eine Steuereinheit zur Steuerung des Treibmittelanteils und/ oder des Eintrags an thermischer Energie in das Gemisch und/ oder der Austragsgeschwindigkeit während des Erzeugungsprozesses zur Einstellung der Dichte sowie der Höhe und Breite des ausgetragenen Voxels der Schaumstruktur (10) gemäß eines vorgegebenen 3D-Modells aufweist.

10. Vorrichtung (1.1, 1.2, 1.3, 1.4) nach Anspruch 9, **dadurch gekennzeichnet, dass** eine Ablegeeinheit (18) zwischen der Düse (6) und der Druckunterlage (8) angeordnet ist und dass die Lage der Ablegeeinheit (18) zur Druckunterlage (8) in drei Dimensionen variierbar ist.

11. Vorrichtung (1.1, 1.2, 1.3, 1.4) nach Anspruch 10, **dadurch gekennzeichnet, dass** zwischen der Düse (6) und der Ablegeeinheit (18) ein Reservoir (19) zur Zwischenspeicherung des Gemisches angeordnet ist.

12. Vorrichtung (1.1, 1.2, 1.3, 1.4) nach einem der Ansprüche 9 bis 11, **dadurch gekennzeichnet, dass** die Vorrichtung (1.1, 1.2, 1.3, 1.4) mehrere Extrusionseinheiten (2) mit daran angeordneten Düsen (6) aufweist.

13. Vorrichtung (1.1, 1.2, 1.3, 1.4) nach einem der Ansprüche 9 bis 12, **dadurch gekennzeichnet, dass** an der Vorrichtung (1.1, 1.2, 1.3, 1.4) eine Aktivatorzuführung (14) und ein damit verbundenes Aktivatoraustragselement (15) angeordnet ist, aus welchem ein Aktivatormaterial zur Verbindung der Stränge der Schaumstruktur (10) miteinander oder zur Verbindung der einzelnen Lagen von Strängen der Schaumstruktur (10) ausgetragen wird.

14. Vorrichtung (1.1, 1.2, 1.3, 1.4) nach einem der Ansprüche 9 bis 13, **dadurch gekennzeichnet, dass** die Extrusionseinheit (2) zur Förderung des Gemisches aus Polymerwerkstoff und Treibmittel eine Filamentförderung oder eine Extruderschnecke aufweist.

15. Vorrichtung (1.1, 1.2, 1.3, 1.4) nach einem der Ansprüche 9 bis 14, **dadurch gekennzeichnet, dass** an der Vorrichtung (1.1, 1.2, 1.3, 1.4) ein Abstandsbestimmungssensor (17) zum Messen des Abstandes vom Abstandsbestimmungssensor (17) zur ausgetragenen Schaumstruktur (10) angeordnet ist.

16. Vorrichtung (1.1, 1.2, 1.3, 1.4) nach einem der Ansprüche 9 bis 15, **dadurch gekennzeichnet, dass** der verwendete Polymerwerkstoff ein Thermoplast oder ein biobasierter Thermoplast ist.
